# EUROPÄISCHE PATENTANMELDUNG

(11) **EP 3 370 439 A1**
(43) Veröffentlichungstag der Anmeldung: **05.09.2018**
(21) Anmeldenummer: 17158778.5
(22) Anmeldetag: 01.03.2017
(51) Int. Cl.: H04R 5/02, B60N 2/48, B60R 11/02, B60R 11/00

(54) **KOPFSTÜTZE MIT LAUTSPRECHERN FÜR FAHRZEUGSITZ**

(71) Anmelder: Audio Mobil Elektronik GmbH, 5282 Braunau am Inn - Ranshofen (AT)
(72) Erfinder: Stottan, Thomas, 5282 Braunau am Inn (AT); Hatheier, Thomas, 4952 Weng im Innkreis (AT); Frei, Richard, 5280 Braunau am Inn (AT)
(74) Vertreter: Jell, Friedrich

(57) **Zusammenfassung**

Es wird eine Kopfstütze, insbesondere für Fahrzeugsitze, mit einer Tragstruktur (2), mit einer Halterung (4), die mindestens ein Halteelement (4.1, 4.2, 4.3) an der Tragstruktur (2) zur Befestigung der Vorrichtung an einem Träger (3), insbesondere einer Tragstange (3.1), aufweist, und mit zumindest einem an der Tragstruktur (2) vorgesehenen Lautsprecherkorb (7.1, 7.2) für einen Lautsprecher (6.1, 6.2) gezeigt. Um eine konstruktiv einfache und standfeste Kopfstütze zu schaffen, wird vorgeschlagen, dass Tragstruktur (2) und Lautsprecherkorb (7.1, 7.2) einstückig geformt sind, wobei der Lautsprecherkorb (7.1, 7.2) das Halteelement (4.1, 4.2) zur Befestigung des Trägers (3) trägt.

## Beschreibung

Die Erfindung betrifft eine Vorrichtung, insbesondere eine Kopfstütze, mit einer Tragstruktur, mit einer Halterung, die mindestens ein Halteelement an der Tragstruktur zur Befestigung der Vorrichtung an einem Träger, insbesondere einer Tragstange, aufweist, und mit zumindest einem an der Tragstruktur vorgesehenen Lautsprecherkorb für einen Lautsprecher.

Aus dem Stand der Technik (WO93/01951A1) sind Kopfstützen mit einer Tragstruktur bekannt, die eine Halterung mit Halteelementen aufweisen um Träger an der Tragstruktur zu befestigen. Um Lautsprecher in der Kopfstütze integrieren zu können, sind in der Tragstruktur Aussparungen eingebracht, in denen Lautsprecher vorgesehen sind. Derartige Aussparungen in der Tragstruktur schwächen jedoch die Stabilität der Kopfstützte und führen zu einer verminderten Rigidität und Standfestigkeit. Zudem weisen derartige Kopfstützen einen vergleichsweise hohen Montageaufwand auf.

Die Erfindung hat sich daher die Aufgabe gestellt eine konstruktiv einfache und standfeste Vorrichtung zu schaffen.

Die Erfindung löst die gestellte Aufgabe dadurch, dass die Tragstruktur in den Lautsprecherkorb übergeht und diesen ausbildet, welcher Lautsprecherkorb das Halteelement zur Befestigung des Trägers trägt.

Geht die Tragstruktur in den Lautsprecherkorb über und bildet diesen aus, welcher Lautsprecherkorb das Halteelement zur Befestigung des Trägers trägt, so kann eine konstruktiv besonders einfache Vorrichtung geschaffen werden, die zudem eine hohe mechanische Stabilität bzw. Rigidität aufweisen kann und eine zuverlässige Befestigung sowohl der Lautsprecher als auch Vorrichtung ermöglicht. Die Standfestigkeit der Vorrichtung kann dadurch zudem erhöht werden.
Im Allgemeinen wird erwähnt, dass es sich bei der erfindungsgemäßen Vorrichtung vorzugsweise um eine Kopfstütze handeln kann. Der Träger ist dabei insbesondere als Tragstange oder Tragprofil ausgebildet und kann dabei eine zuverlässige Befestigung der Kopfstütze an einem Fahrzeugsitz ermöglichen.
Im Allgemeinen wird weiter festgehalten, dass die Lautsprecherkörbe einstückig durch die Tragstruktur ausgebildet werden können. Damit kann sich die Möglichkeit ergeben, beispielsweise durch Spritzgießen eine besonders einfache herzustellende Tragstruktur für die Vorrichtung bzw. insbesondere für eine Kopfstütze zu schaffen. Zudem sind auch andere Fertigungsverfahren, wie etwa Tiefziehen und Laminieren möglich.

Eine besonders kompakte Vorrichtung kann zudem geschaffen werden, wenn das Halteelement an die Rückseite des Lautsprecherkorbs anschließt. Außerdem bedarf es bei dieser Anordnung des Halteelements keiner Rücksichtnahme auf eventuellen seitlichen Durchbrüchen des Lautsprecherkorbs, um akustische Parameter in der Schallabgabe sicherstellen zu können.

Geht die Tragstruktur vom Lautsprecherkorb in das Halteelement über und bildet dieses aus, so kann der konstruktive Aufwand der Vorrichtung weiter vereinfacht werden. Durch den Verzicht auf zusätzliche Halteelemente bzw. zusätzliches Montagematerial kann zudem eine fertigungstechnisch einfache Vorrichtung, insbesondere in Form einer Kopfstütze, geschaffen werden. Im Allgemeinen wird weiter festgehalten, dass die Halteelemente vorteilhafterweise einstückig durch die Tragstruktur ausgebildet werden können.

Die Zuverlässigkeit der Befestigung des Trägers an der Tragstruktur kann weiter erhöht werden, wenn das Halteelement eine Schnappschelle zur Aufnahme und Befestigung des Trägers ausbildet.

Trägt der Lautsprecherkorb mehrere Halteelemente zur Befestigung des Trägers, kann dies die mechanische Verbindung in der Standfestigkeit weiter erhöhen.

Eine besonders vorteilhafte Vorrichtung kann geschaffen werden, wenn die Tragstruktur in zwei Lautsprecherkörbe übergeht und diese ausbildet, welche Lautsprecherkörbe sich an gegenüberliegenden Randbereichen der Tragstruktur befinden und je das Halteelement zur Befestigung des Trägers tragen. Durch den insbesondere symmetrischen Aufbau der Tragstruktur können noch höhere Belastungen abgetragen werden und eine besonders standfeste Vorrichtung geschaffen werden.

Die Stabilität und somit die Standfestigkeit der Vorrichtung können weiter erhöht werden, wenn die Tragstruktur mindestens eine Verstärkungsrippe aufweist, die ein drittes Halteelement zur Befestigung des Trägers ausbildet. Diese Verstärkungsrippen können bevorzugterweise aus dem Material der Tragstruktur einstückig ausgeformt sein um eine besonders rigide Tragstruktur zu schaffen.

Ist das dritte Halteelement zwischen den beiden Halteelementen der Lautsprecherkörbe angeordnet, so kann durch das dritte Halteelement nicht nur eine zuverlässigere Befestigung des Trägers an der Tragstruktur erfolgen, sondern auch die Stabilität der Tragstruktur weiter erhöht werden, da der Träger als zusätzliches Verstärkungselement in der Tragstruktur wirken kann.

Die Erfindung kann sich besonders auszeichnen, wenn die Vorrichtung mindestens einen Träger zur Befestigung der Vorrichtung, insbesondere der Kopfstütze, an einem Sitz, insbesondere Fahrzeugsitz, aufweist.

Verläuft der Träger bügelförmig vom ersten Lautsprecherkorb zum zweiten Lautsprecherkorb und ist an deren Haltelementen befestigt, so kann eine besonders zuverlässige Verbindung zwischen Träger und Tragstruktur geschaffen werden.

In den Figuren ist beispielsweise der Erfindungsgegenstand anhand mehrerer Ausführungsbeispiele näher dargestellt. Es zeigen
- Fig. 1: eine Rückansicht der erfindungsgemäßen Vorrichtung in einer ersten Ausführungsform,
- Fig. 2: eine Vorderansicht der Vorrichtung aus Fig. 1, und
- Fig. 3: eine Rückansicht der erfindungsgemäßen Vorrichtung in einer zweiten Ausführungsform.

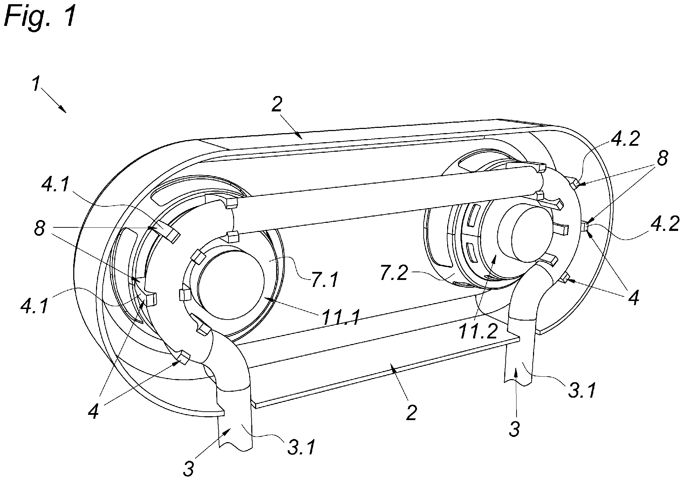

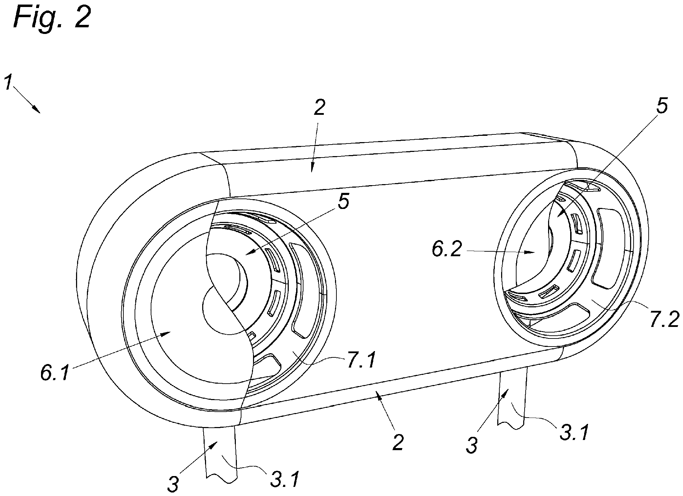

Nach Fig. 1 ist eine erfindungsgemäße Vorrichtung 1 in Gestalt einer Kopfstütze für einen Fahrzeugsitz mit einer Tragstruktur 2 nach dem ersten Ausführungsbeispiel dargestellt. An der Tragstruktur 2 ist ein nicht näher dargestellter Stützkörper, beispielsweise aus Schaumstoff, zur Abstützung eines Kopfs eines im Fahrzeugsitz Sitzenden vorgesehen.
Die Vorrichtung 1 weist zudem eine Halterung 4 auf, die mindestens ein Halteelement 4.1, 4.2 an der Tragstruktur 2 aufweist und zur Aufnahme eines Trägers 3 ausgebildet ist. Der Träger 3 dient zur Befestigung der Vorrichtung 1 an einem Fahrzeugsitz. Die Halterung 4 weist dabei mehrere Halteelemente 4.1, 4.2 auf, durch die der Träger 3 mit der Tragstruktur 2 kraft- und formschlüssig verbunden ist. Wie aus den Fig. 1-3 ersichtlich, ist der Träger 3 vorzugsweise als Tragstange 3.1 ausgebildet.
Wie der Fig. 2 entnommen werden weist die Tragstruktur 2 zwei Aufnahmen 5 auf, um dort Lautsprecher 6.1, 6.2 vorsehen zu können. Insbesondere sind bei den Aufnahmen 5 Lautsprecherkörbe 7.1, 7.2 zu erkennen, die damit an der Tragstruktur 2 vorgesehenen sind. In diesem Zusammenhang wird erwähnt, dass selbstverständlich die Tragstruktur nur eine Aufnahme 5 für einen Lautsprecher 6.1 bzw. 6.2 aufweisen kann, was nicht näher dargestellt worden ist.

Die Lautsprecherkörbe 7.1, 7.2 sind dabei erfindungsgemäß durch die Tragstruktur 2 ausgebildet, indem die Tragstruktur 2 in die Lautsprecherkörbe 7.1, 7.2 übergeht, wodurch eine naht- und stoßfreie Tragstruktur 2 der Vorrichtung 1 erreicht werden kann. Zudem können damit die Lautsprecherkörbe 7.1, 7.2 in diesem Bereich der Vorrichtung 1 gleich wie meist dort zu findende Rippenstrukturen als Versteifung der Tragstruktur 2 dienen und damit als stabilitätsgebendes Element der Tragstruktur 2 wirken.

Besonders bevorzugt bildet die Tragstruktur 2 dabei zwei Lautsprecherkörbe 7.1, 7.2 aus, die sich an gegenüberliegenden Randbereichen der Tragstruktur 2 befinden. Der Träger 3 in Form einer Tragstange 3.1 erstreckt sich dabei bügelförmig vom ersten zum zweiten Lautsprecherkorb 7.1, 7.2 und ist an deren Halteelementen 4.1, 4.2 befestigt. Es muss nicht weiter erwähnt werden, dass die Tragstruktur 2 an mehreren Tragstangen 3.1, vorzugsweise zwei, befestigt ist, was nicht näher dargestellt worden ist.

Die Lautsprecherkörbe 7.1, 7.2 können dabei insbesondere einstückig aus der Tragstruktur 2 ausgeformt sein was eine besonders rigide Tragstruktur 2 schafft. Durch die in die Lautsprecherkörbe 7.1, 7.2 übergehende Tragstruktur 2 kann einerseits die Montage der Lautsprecher 6.1, 6.2 erleichtert werden und andererseits die Steifheit der Tragstruktur 2 durch die einstückig ausgeformten Lautsprecherkörbe 7.1, 7.2 als Strukturelement erhöht werden. An der Rückseite 11.1, 11.2 der Lautsprecherkörbe 7.1, 7.2 sind zudem Haltelemente 4.1, 4.2 vorgesehen, welche eine kraftschlüssige Verbindung zwischen Träger 3 und Tragstruktur 2 herstellen. Die Lautsprecher 6.1, 6.2 können hierbei etwa in der Art einer Kartusche von der Vorderseite in die jeweilige Aufnahme 5 eingesetzt und dort befestigt werden, was besonders einfache Montagebedingungen schafft.

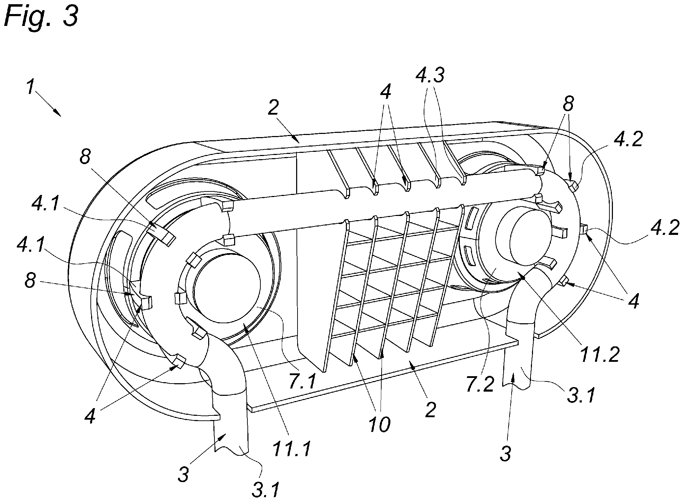

Wie in den Fig. 1 und 3 zu erkennen ist, schließen die Haltelemente 4.1, 4.2 an die Rückseite 11.1, 11.2 der Lautsprecherkörbe 7.1, 7.2 an. In einer bevorzugten Ausführungsform kann die Tragstruktur 2 in die Halteelemente 4.1, 4.2, 4.3 übergehen. Insbesondere sind dabei die Halteelemente 4.1, 4.2, 4.3 einstückig durch die Tragstruktur 2 ausgebildet. Die Halteelemente 4.1, 4.2, 4.3 werden dabei direkt bei der Fertigung gemeinsam mit der Tragstruktur 2 abgeformt um eine besonders kompakte Tragstruktur 2 zu schaffen. Es ist jedoch ebenso vorstellbar, die Haltelemente 4.1, 4.2 nachträglich an der Rückseite 11.1, 11.2 der Lautsprecherkörbe 7.1, 7.2 vorzusehen.

Wie den Fig. 1 und 3 weiter entnommen werden kann, bilden die Haltelemente 4.1, 4.2, 4.3 bevorzugt Schnappschellen 8 zur Aufnahme und Befestigung des Trägers 3 aus. Die Schnappschellen 8 besitzen dabei eine federnde und selbstverschnappende Eigenschaft, wodurch eine werkzeuglose Montage des Trägers 3 in Form der Tragstangen 3.1 an der Tragstruktur 2 erfolgen kann. Die Erfindungsgemäße Vorrichtung 1 kann sich dabei durch besonders einfache Fertigungsverhältnisse auszeichnen.

Fig. 3 zeigt in einer weiteren Ausführungsform, dass an der Tragstruktur 2 Verstärkungsrippen 10 vorgesehen sind. Die Verstärkungsrippen 10 bieten neben den ausgeformten Lautsprecherkörben 7.1, 7.2 eine zusätzliche Versteifung der Tragstruktur 2, wodurch diese hohen mechanischen Belastungen standhalten kann. Zudem können an den Verstärkungsrippen 10 dritte Halteelemente 4.3 vorgesehen sein um eine weitere Befestigung des Trägers 3 auszubilden und eine Versteifung der Tragstruktur 2 zu erreichen. Die Verstärkungsrippen 10 und somit die dritten Halteelemente 4.3 sind zwischen den Halteelementen 4.1, 4.2 der Lautsprecherkörbe 7.1, 7.2 angeordnet.

## Patentansprüche

1. Vorrichtung, insbesondere Kopfstütze, mit einer Tragstruktur (2), mit einer Halterung (4), die mindestens ein Halteelement (4.1, 4.2, 4.3) an der Tragstruktur (2) zur Befestigung der Vorrichtung an einem Träger (3), insbesondere einer Tragstange (3.1), aufweist, und mit zumindest einem an der Tragstruktur (2) vorgesehenen Lautsprecherkorb (7.1, 7.2) für einen Lautsprecher (6.1, 6.2), **dadurch gekennzeichnet, dass** die Tragstruktur (2) in den Lautsprecherkorb (7.1, 7.2) übergeht und diesen ausbildet, welcher Lautsprecherkorb (7.1, 7.2) das Halteelement (4.1, 4.2) zur Befestigung des Trägers (3) trägt.

2. Vorrichtung nach Anspruch 1, **dadurch gekennzeichnet, dass** das Halteelement (4.1, 4.2) an die Rückseite (11.1, 11.2) des Lautsprecherkorbs (7.1, 7.2) anschließt.

3. Vorrichtung nach Anspruch 1 oder 2, **dadurch gekennzeichnet, dass** die Tragstruktur (2) vom Lautsprecherkorb (7.1, 7.2) in das Halteelement (4.1, 4.2) übergeht und dieses ausbildet.

4. Vorrichtung nach einem der Ansprüche 1 bis 3, **dadurch gekennzeichnet, dass** das Halteelement (4.1, 4.2) eine Schnappschelle (8) zur Aufnahme und Befestigung des Trägers (3) ausbildet.

5. Vorrichtung nach einem der Ansprüche 1 bis 4, **dadurch gekennzeichnet, dass** der Lautsprecherkorb (7.1, 7.2) mehrere Halteelemente (4.1, 4.2) zur Befestigung des Trägers (3) trägt.

6. Vorrichtung nach einem der Ansprüche 1 bis 5, **dadurch gekennzeichnet, dass** die Tragstruktur (2) in zwei Lautsprecherkörbe (7.1, 7.2) übergeht und diese ausbildet, welche Lautsprecherkörbe (7.1, 7.2) sich an gegenüberliegenden Randbereichen der Tragstruktur (2) befinden und je das Halteelement (4.1, 4.2) zur Befestigung des Trägers (3) tragen.

7. Vorrichtung nach einem der Ansprüche 1 bis 6, **dadurch gekennzeichnet, dass** die Tragstruktur (2) mindestens eine Verstärkungsrippe (10) aufweist, die ein drittes Halteelement (4.3) zur Befestigung des Trägers (3) ausbildet.

8. Vorrichtung nach Anspruch 6 und 7, **dadurch gekennzeichnet, dass** das dritte Halteelement (4.3) zwischen den beiden Halteelementen (4.1, 4.2) der Lautsprecherkörbe (7.1, 7.2) angeordnet ist.

9. Vorrichtung nach einem der Ansprüche 1 bis 8, **dadurch gekennzeichnet, dass** die Vorrichtung (1) mindestens einen Träger (3) zur Befestigung der Vorrichtung (1), insbesondere Kopfstütze, an einem Sitz, insbesondere Fahrzeugsitz, aufweist.

10. Vorrichtung nach Anspruch 6 und 9, **dadurch gekennzeichnet, dass** der Träger (3) bügelförmig vom ersten Lautsprecherkorb (7.1) zum zweiten Lautsprecherkorb (7.2) verläuft und an deren Haltelementen (4.1, 4.2) befestigt ist.
